# FASCICULE DE BREVET EUROPEEN

(11) **EP 1 806 265 B1**
(45) Date de publication et mention de la délivrance du brevet: **08.10.2008**
(21) Numéro de dépôt: 06360003.5
(22) Date de dépôt: 10.01.2006
(51) Int. Cl.: B60S 3/04

(54) **Système de lavage de véhicule robotisé**
Robotisiertes Fahrzeugwaschsystem
Robotized car wash system

(43) Date de publication de la demande: 11.07.2007
(73) Titulaire: Financière Clairac, 75116 Paris (FR)
(72) Inventeur: Sarbach, Jean-Charles, 67440 Schwenheim (FR); Brouchet, Yves, 67000 Strasbourg (FR)
(74) Mandataire: Littolff, Denis

(56) Documents cités:
- EP-A- 0 341 388
- WO-A-20/04089708
- WO-A-20/05068270
- DE-A1- 19 512 302
- FR-A- 2 674 559
- US-A- 3 854 054
- US-A- 4 293 914
- US-A- 4 383 344
- US-A- 4 726 388
- US-A- 4 981 523
- US-A- 4 988 042
- US-A- 5 016 662
- US-A- 5 447 574
- US-A- 5 901 398
- US-A1- 2003 145 877
- US-B1- 6 502 765
- PATENT ABSTRACTS OF JAPAN vol. 1995, no. 08, 29 septembre 1995 (1995-09-29) -& JP 07 117635 A (SHIN MEIWA IND CO LTD), 9 mai 1995 (1995-05-09)

## Description

La présente invention concerne un système de lavage à liquide en haute pression implantable sur une piste de lavage par exemple de véhicules automobiles, ainsi qu'un procédé d'automatisation dudit lavage.

Actuellement, les installations de lavage haute pression automatisées font dans la plupart des cas appel à des portiques guidés en translation axiale le long des véhicules, qui comportent des buses projetant du liquide à haute ou moyenne pression pendant leur trajet par rapport aux véhicules. Les buses sont souvent fixes, au mieux mobiles dans le portique, et les produits et la pression d'injection dépendent des programmes disponibles et du choix de l'utilisateur.

Les portiques en question comportent classiquement deux montants latéraux et une traverse horizontale surmontant le véhicule, sur lesquels les buses sont fixées. Ces configurations ne permettent aucune maîtrise de la distance séparant le jet pressurisé de la carrosserie du véhicule. Or, la variabilité de cette distance - résultant notamment des différences de volume des véhicules à nettoyer - influe notablement sur l'efficacité du lavage. L'effet mécanique de l'impact de la haute pression, qui est essentiel à l'efficacité du nettoyage, n'est en effet pas utilisé de manière optimale, et d'autant moins que la distance buse/surface à nettoyer augmente.

Le lavage n'est au surplus pas uniforme : si l'utilisateur gare son véhicule plus près d'un montant du portique que de l'autre, le lavage sera *a priori* meilleur du côté le plus proche du montant.

Pour pallier les insuffisances inhérentes à ces systèmes, et en particulier l'absence de maîtrise des effets mécaniques des jets, la tendance est d'utiliser des produits chimiques de plus en plus sophistiqués et onéreux, ainsi qu'une quantité d'eau dont l'importance croît à la mesure des exigences grandissantes des utilisateurs en matière de propreté de leur véhicule. Le volume d'eau qu'on en arrive à utiliser pour laver un seul véhicule est en tout état de cause très supérieur au volume raisonnablement nécessaire. Il en résulte évidemment un surcoût d'exploitation.

Au regard des préoccupations environnementales actuelles, ce type de système ne peut dès lors pas être considéré comme répondant de manière satisfaisante aux évolutions envisagées. Par ailleurs, les réglementations liées au rejet de produits toxiques deviennent de plus en plus draconiennes, et la tendance est d'imposer des dispositifs de recyclage et de retraitement des rejets liquides qui alourdissent encore les coûts d'exploitation.

Enfin, la nécessité d'économiser l'eau s'impose de plus en plus. Cette nécessité répond d'ailleurs autant à des exigences de développement durable, donc dans une perspective à long terme, qu'à de simples raisons financières à court terme, l'eau devenant de plus en plus chère.

En d'autres termes, dans les systèmes classiques tels que décrits ci-dessus, la nécessité d'employer des produits chimiques sophistiqués et une quantité d'eau disproportionnée conduisent à un rendement économique de l'installation d'autant moins favorable que les architectures actuelles des portiques de lavage haute pression en font des dispositifs lourds, c'est à dire onéreux en termes d'investissement, sans parler du coût de l'énergie nécessaire pour assurer leurs déplacements.

Les dimensions des systèmes existants ne permettent d'ailleurs pas leur implantation a posteriori par exemple dans les nombreux sites proposant des pistes de lavage en libre-service. L'espace requis est en effet trop important, car le déplacement de ces portiques a pour conséquence de requérir une longueur d'implantation qui est nettement supérieure à celle des pistes de lavage en libre-service actuelles. Pour ces systèmes à portique, les exigences de consommation en eau et en produits chimiques exigent enfin des moyens techniques nécessitant un emplacement qui n'est pas toujours prévu, et dont l'implantation représente un coût supplémentaire.

La présente invention remédie aux divers inconvénients mentionnés, en proposant un système de lavage performant, facilement implantable dans la quasi-totalité des centres de lavage existants, et dont le bon rendement a une incidence économique très favorable sur le fonctionnement.

Ce système comporte :
- des moyens de mesure de géométrie extérieure du véhicule ;
- des moyens de stockage des paramètres les caractérisant ;
- au moins un robot de lavage muni de moyens de détection et de mesure d'une part, et de moyens de positionnement d'autre part, lui permettant de se déplacer en permanence au voisinage du véhicule ; ledit robot présentant des buses de projection de liquide ;
- des moyens de sélection d'un parmi plusieurs programmes de lavage mémorisés ; et
- une unité centrale de gestion des moyens mentionnés et de pilotage du robot.

Un tel système a déjà été décrit, par exemple dans le document US 2003/0145877, qui divulgue un robot en forme de portique rigide présentant des buses de lavage dont la distance à la carrosserie du véhicule varie selon la forme de ladite carrosserie, du fait de la rigidité du portique.

Au contraire, selon l'invention, telle que définie dans la revendication 1, le robot reste en permanence, par rapport à la carrosserie, à une distance sensiblement constante et inférieure à une valeur limite.

La différence essentielle entre ce système et ceux qui existaient dans l'art antérieur réside dans son adaptabilité à chaque forme de véhicule, ce qui lui permet d'agir à tout moment avec une efficacité maximale. L'effet mécanique qui résulte du jet à haute pression est en effet alors constamment utilisé dans sa pleine mesure, puisque les buses de projection sont en permanence situées à proximité, ou plus précisément à une distance maîtrisée, de la carrosserie. Le robot de lavage étant muni de moyens de détection, il est en outre possible de mettre en ouvre un contrôle de la qualité et/ou de l'accomplissement du travail effectué.

L'existence du robot piloté par une unité centrale électronique qui a mémorisé la géométrie du véhicule permet d'introduire de l'intelligence dans l'opération de lavage, d'où l'amélioration du rendement. Il n'est ici nullement question d'augmenter les quantités de liquide, pas plus que d'amélioration des performances des produits de lavage.

Selon une possibilité, le système comporte des moyens de détection de l'entrée et de la sortie d'un véhicule respectivement dans et de la piste. Il s'agit là d'une caractéristique qui a deux finalités : d'une part permettre un positionnement correct du véhicule par rapport aux dispositifs de mesure de sa géométrie et au robot de lavage, de manière à ce que ce dernier puisse effectuer le cycle de lavage dans les meilleures conditions, et d'autre part assurer un niveau de sécurité suffisant, en liaison avec d'autres caractéristiques qui seront développées ci-après.

Ces moyens de détection d'entrée et de la sortie consistent de préférence en deux paires d'émetteurs et de récepteurs disposés au voisinage respectivement de l'entrée et de la sortie de la piste. Cette caractéristique s'applique évidemment à des pistes qui comportent une entrée et une sortie distinctes, comme c'est le cas dans la plupart des configurations. Le véhicule progresse alors toujours dans la même direction, ce qui est en fait quasi indispensable pour la gestion d'un centre de lavage pour permettre aux usagers d'attendre leur tour en formant des filets devant l'entrée de chaque piste.

L'émetteur et le récepteur de chaque paire peuvent alors être placés l'un en face de l'autre de manière à établir un périmètre de sécurité avec les parois latérales de la piste de lavage.

Dans cette hypothèse, un faisceau barre l'entrée et la sortie, dont la coupure entraîne l'arrêt du robot s'il est en cours de fonctionnement. Selon une possibilité, les émetteurs et les récepteurs peuvent être à infrarouge.

La philosophie du système de lavage de l'invention étant de permettre à l'utilisateur de choisir entre plusieurs programmes, il est nécessaire qu'il quitte son véhicule à cet effet. C'est l'une des raisons pour lesquelles le système comprend au moins un organe de signalisation à destination du conducteur, aux fins de lui indiquer que le positionnement du véhicule en vue du lavage est correct et qu'il peut donc le quitter. Cet organe émet à cet effet un signal de positionnement correct lorsque le véhicule est au-delà des moyens de détection d'entrée et en deçà des moyens de détection de sortie, et renseigne au contraire l'utilisateur quand cela n'est pas vrai et qu'il faut par conséquent encore déplacer le véhicule.

Cette fonction est également importante dans l'optique du lavage car, pour assurer un nettoyage correct du véhicule, il faut bien entendu que celui-ci soit correctement placé par rapport aux possibilités d'intervention du robot et des moyens de mesure de sa géométrie.

Ceux-ci sont évidemment mis en oeuvre avant le robot de nettoyage, et sont basés sur un dispositif comprenant au moins un diffuseur de trames couplé à au moins un capteur de la forme de ladite trame, deux de ces dispositifs étant en fait disposés de part et d'autre du véhicule par rapport à l'axe de la piste, et coulissables par pas successifs selon des glissières parallèles audit axe et situées à une hauteur au moins égale à celle du véhicule.

Il s'agit de réaliser un maillage du véhicule, à la manière des logiciels permettant la mise en forme d'objets en trois dimensions, pour que la forme et le dimensionnement extérieurs du véhicule puissent être mémorisés de manière à permettre un positionnement ultérieur du robot sur une forme quasi homothétique et de dimension un peu supérieure. Ce maillage doit restituer la géométrie du véhicule de façon suffisamment précise pour que les particularités de forme soient bien rendues afin d'éviter toute possibilité de collision entre le robot de lavage et sa carrosserie.

De préférence, les diffuseurs constituent chaque trame à l'aide d'un rayon laser, alors que les capteurs sont des capteurs CCD. Cette association, pilotée par un logiciel adéquat, permet de réaliser le maillage en mémorisant la position d'une pluralité de points sur chaque trame. Les protubérances de type rétroviseur, sont bien entendu également prises en compte, ce qui permet un lavage complet et précis du véhicule.

Dans l'optique de renforcer la sécurité du système, des barrières de protection sont disposées aux deux extrémités axiales de la piste. Ces barrières peuvent par exemple être constituées de rideaux en matière plastique souple.

Lorsque le conducteur du véhicule, après être sorti de la piste de lavage proprement dite, entend démarrer un cycle de lavage, il a accès à des moyens de sélection d'un programme. Des moyens de paiement leurs sont en général associés.

L'un des éléments essentiels du système de l'invention est le robot, qui comporte selon une configuration possible une tête dotée de buses de projection de liquide et de moyens de détection et de mesure. Cette tête est par exemple articulée par rapport à l'extrémité d'un bras dont l'autre extrémité est reliée à un chariot via une liaison de type à rotule, ledit chariot étant disposé coulissant au moins parallèlement à l'axe de la piste dans une glissière montée au-dessus du véhicule.

Ce robot doit pouvoir être déplaçable très aisément dans toutes les directions, avec une amplitude au surplus suffisante pour atteindre toutes les surfaces à nettoyer du véhicule. Pour améliorer les possibilités de débattement dans toutes les directions, le bras se compose de préférence de trois portions articulées à leurs jonctions.

Par ailleurs, la portion du bras reliée à la rotule peut se déplacer en translation par rapport à cette dernière par exemple au moyen d'une liaison de type crémaillère. Cette liaison permet d'augmenter notablement le volume couvert par le robot. Une telle exigence peut survenir lorsque le volume de la voiture est particulièrement important, ou lorsqu'il s'agit de laver un véhicule de type minibus etc.

Selon une possibilité additionnelle, la glissière du chariot comporte au moins une poutrelle profilée apte à permettre un déplacement rectiligne du chariot.

Au niveau de la tête du robot de lavage, les buses de projection de liquide à haute pression sont par exemple prévues au nombre de trois. Les moyens de mesure et de détection qui équipent ladite tête peuvent être constitués d'au moins un capteur CCD.

Ces moyens permettent notamment de mettre en oeuvre un lavage fin des saletés qui peuvent persister sur la carrosserie d'un véhicule. L'unité centrale de gestion est en effet équipée d'un logiciel de reconnaissance des formes et des couleurs qui est prévu pour mettre en oeuvre une détection spécifique de ces saletés persistantes. Celles-ci doivent en effet être distinguées des accrocs éventuels (écaillage de peinture...) de la carrosserie, lesquels sont en général plutôt des reliefs s'inscrivant en creux à l'inverse des salissures. Leur détection est importante, car il n'est nullement nécessaire que le robot s'attarde sur de tels reliefs. A l'inverse, lorsqu'une saleté, détectée sous la forme d'un relief protubérant par exemple de couleur foncée, est décelée sur la carrosserie, la tête de lavage repasse à plusieurs reprises, si besoin est en s'approchant encore de la surface, jusqu'à ce que le système de détection ait validé la disparition de la tache.

Le logiciel de détection des formes utilisé peut par exemple être basé sur une technologie du type à logique floue ou à réseau de neurones.

De manière classique, les moyens de sélection offrent des options de lavage choisies parmi les suivantes :
- prélavage à pH faible ;
- prélavage à pH élevé ;
- lavage ;
- lavage à mousses actives ;
- rinçage à eau dure ;
- rinçage avec cire lustrante ;
- rinçage à l'eau osmosée ;
- séchage.

Selon une option possible, le système de lavage peut être équipé d'un écran d'affichage par exemple de type LCD qui reproduit à l'attention de l'usager l'image numérique de la forme géométrique de son véhicule pendant et/ou après l'opération de reconnaissance géométrique.

Un tel organe de visualisation peut notamment permettre à l'utilisateur de valider le bon fonctionnement du système, en reconnaissant son véhicule.

Enfin, le robot peut comporter un système de communication, par exemple du type synthèse et / ou reconnaissance vocale, en vue d'échanger des informations avec l'usager. L'implantation d'un tel système vise à rendre l'ensemble plus convivial et par conséquent attractif.

Le système de lavage automatique équipé d'un robot tel que proposé dans l'invention est dans un premier temps intéressant car sa conception permet une adaptation à de nombreux sites déjà existants. Il offre au surplus une économie dans la consommation de l'eau, en produit de lavage et en énergie qui incite à l'implanter à grande échelle sur ces sites. L'invention permet enfin d'aboutir à des résultats performants en terme de lavage, la reconnaissance par vision artificielle de l'état de saleté des véhicules et la possibilité corollaire de s'attarder plus longtemps sur des saletés tenaces autorisant à cet égard une efficacité de lavage bien plus élevée que dans les systèmes existants.

Comme indiqué auparavant, l'invention concerne également un procédé d'automatisation de lavage par exemple de véhicules sur une piste adéquate, au moyen du système ci-dessus, ledit procédé se caractérisant à titre essentiel en ce qu'il comporte les étapes suivantes :
- détection de l'entrée du véhicule dans la piste ;
- validation de son positionnement dans un périmètre sécurisable de la piste ;
- indication au conducteur de quitter son véhicule ;
- sélection du programme de lavage ;
- reconnaissance de la géométrie et des dimensions du véhicule ; et
- lavage du véhicule par un robot se déplaçant à distance sensiblement constante de la surface extérieure du véhicule et se positionnant selon une forme quasi homothétique et de dimension un peu supérieure à celle du véhicule.

L'ensemble de ces étapes sont nécessaires à la réalisation du procédé, car il est bien évident que la reconnaissance de la forme et la réalisation de l'opération de lavage ne peuvent se faire que si le véhicule est bien positionné sur la piste de lavage.

De préférence, il est procédé à une fermeture de chaque issue de la piste avant le lavage du véhicule, pour des raisons notamment tenant à la sécurité des utilisateurs.

La validation du positionnement du véhicule, qui précède la fermeture des issues, est réalisée par des moyens de détection de l'entrée / sortie du véhicule.

Comme mentionné ci-dessus dans le cadre du système de lavage, le procédé d'automatisation se base notamment sur une détection des salissures par reconnaissance d'un relief dépassant de la carrosserie du véhicule. L'existence de cette reconnaissance améliore largement le rendement de l'opération de lavage, puisqu'elle permet dans un deuxième temps de faire repasser en boucle les organes de lavage à l'endroit où la salissure a été détectée, jusqu'à ce que celle-ci disparaisse.

Optionnellement, selon le procédé de l'invention, il est possible de réaliser le nettoyage de la piste lorsque le véhicule ne s'y trouve plus.

Au titre de la convivialité de l'ensemble, des messages sous forme de jet de produit de lavage et / ou de faisceau de lumière peuvent être projetés sur les parois du véhicule et / ou de la piste de lavage.

Le lavage peut enfin être encore optimisé, notamment si au moins un produit de lavage est projeté sur le véhicule pendant la phase de reconnaissance de la géométrie et des dimensions du véhicule.

L'invention va à présent être décrite plus en détail, en référence aux figures annexées, pour lesquelles :
- la figure 1 est une vue en perspective d'une piste de lavage selon la présente invention ;
- la figure 2 représente d'une manière schématique l'opération de maillage d'un véhicule en passe d'être lavé dans un système selon l'invention :

- la figure 3 montre une vue de côté du robot ; et
- la figure 4 est une vue de dessus de ce même robot.

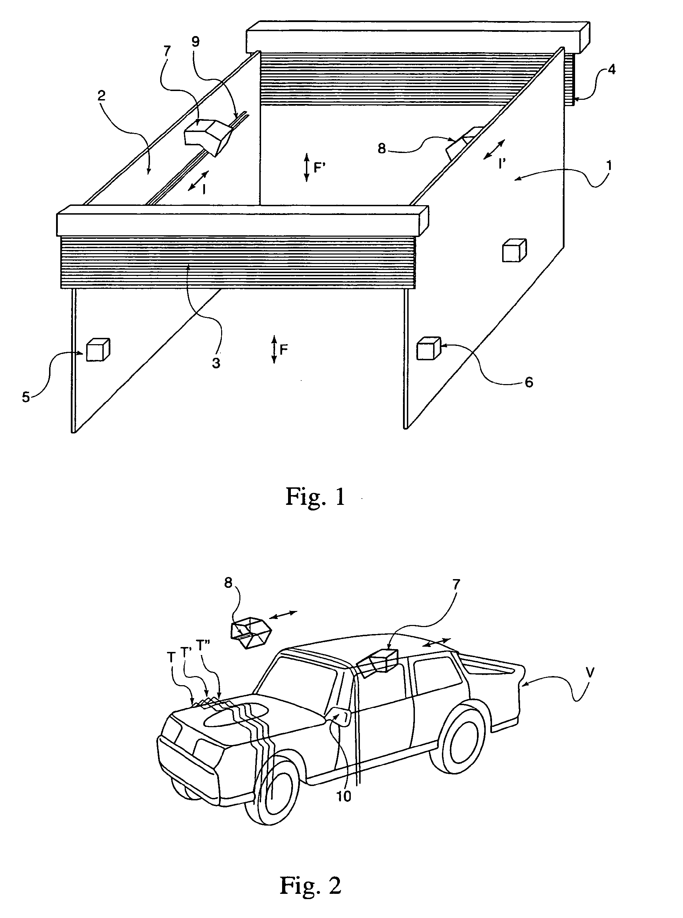

En référence à la figure 1, la piste de lavage de l'invention est délimitée par deux parois latérales (1, 2) dont les extrémités encadrent une ouverture d'entrée et une ouverture de sortie. Le véhicule progresse donc dans le même sens à la fois pour l'entrée et pour la sortie de la piste de lavage, ce qui est compatible avec la logique de fonctionnement d'un centre de lavage.

Des rideaux (3, 4) permettent d'obturer au cours du fonctionnement les ouvertures d'entrée et de sortie de la piste de lavage. Ces rideaux (3, 4) sont par exemple réalisés en matière plastique, et sont bien entendu déplaçables de manière à permettre l'insertion ou l'extraction d'un véhicule. Leur sens de déplacement est symbolisé par les flèches F, F'.

Des moyens de détection de l'entrée du véhicule dans la piste de lavage sont prévus. Plus précisément, il s'agit d'un émetteur (5) et d'un récepteur (6), fonctionnant par exemple suivant une technologie infrarouge. Le faisceau émis par l'émetteur (5) est coupé pendant la pénétration du véhicule dans la piste de lavage. Dès que le faisceau est rétabli, cela signifie que le véhicule se trouve en principe dans la piste de lavage, ce qui peut être vérifié (voir ci-après). Un même couple d'émetteur / récepteur (non apparent sur la figure) est disposé en sortie de la piste de lavage. Ces moyens de détection d'entrée et de sortie définissent un périmètre de sécurité, dont le franchissement provoque l'arrêt du robot pendant le fonctionnement. Ainsi, si une personne veut par exemple pénétrer à l'intérieur de la piste de lavage, par exemple en soulevant le rideau (3), au cours du fonctionnement, la coupure du faisceau allant de l'émetteur (5) au détecteur (6) entraînera l'arrêt du robot et par conséquent de l'opération de lavage.

Les moyens de mesure (7, 8) de la forme et de la dimension extérieures du véhicule à laver sont prévus au nombre de deux dans la piste de lavage. Ces moyens (7, 8) se déplacent longitudinalement sur des glissières, dans le sens des flèches (1, 1'). Ces glissières sont positionnées suffisamment haut pour permettre un balayage complet du véhicule, et elles courent sur la quasi totalité de la longueur de la piste de lavage. Elles permettent donc la réalisation d'un maillage complet du véhicule. Ce maillage est réalisé à l'aide de diffuseurs de trames laser couplés à des capteurs CCD, l'ensemble étant piloté par un logiciel adéquat. La réalisation de ce maillage est symbolisée en figure 2, dans laquelle le véhicule V est soumis à deux faisceaux laser émis de part et d'autre du véhicule par les moyens de mesure (7, 8), dans lesquels figurent également le ou les capteurs CCD.

Le fonctionnement est le suivant : chacun des moyens de mesure (7 et 8) se déplace le long de la glissière (9), adoptant une succession de positions fixes de préférence régulièrement espacées selon un pas p. A chacune de ces positions, un tramage est réalisé par le laser, le maillage étant complété par la mémorisation d'une succession de points le long de chaque trame, la densité du maillage étant gérée par le logiciel. L'ensemble des points est mémorisé dans des moyens de stockage contrôlés par l'unité centrale de gestion électronique de la piste de lavage.

En figure 2, un certain nombre de trames T, T', T" ont été représentées à titre d'exemple.

Cette figure fait également apparaître un tramage réalisé au niveau d'un rétroviseur (10). Dans cette hypothèse, et comme cela est clairement visible sur la figure 2, les trames prennent en considération la protubérance constituée du rétroviseur (10), qui est donc parfaitement intégrée à la reconnaissance du volume global du véhicule.

En phase de lavage, lorsque ladite forme sera restituée à partir des différents points stockés en mémoire, le robot et son bras prendront en considération l'existence de cette protubérance (10), et s'écarteront par conséquent pour pouvoir l'éviter d'une part, et procéder au lavage du rétroviseur d'autre part.

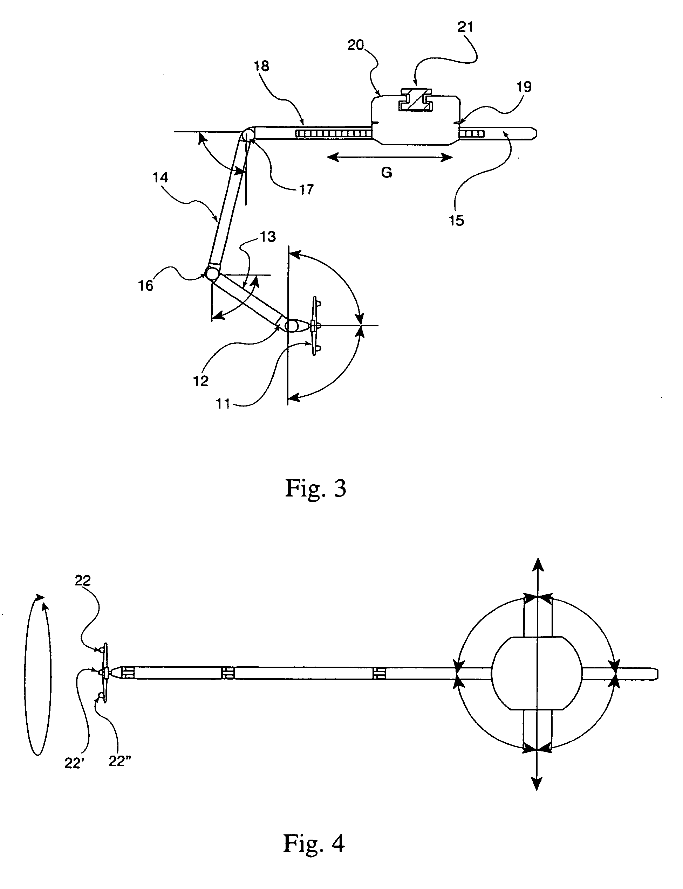

Un exemple du robot pouvant réaliser un tel lavage est représenté en figure 3. Dans la configuration illustrée par cette figure, le robot comporte un bras comportant lui-même trois portions (13, 14 et 15) articulées deux à deux en (16) et (17). La portion (15) comporte un système à crémaillère (18) qui lui permet de se déplacer dans la direction de la flèche G par rapport à une rotule (19). La liaison à rotule (19) est elle-même réalisée dans un chariot (20) coulissant par rapport à une glissière (21). Cette glissière surmonte la piste de lavage telle qu'elle apparaît en figure 1, dans une direction de préférence sensiblement axiale.

La tête (11) comporte trois buses (22, 22', 22") qui apparaissent particulièrement bien en figure (4) et délivrent du fluide à haute pression. Cette tête est rotative, la rotation étant notamment utilisée pour tenter d'éliminer les salissures tenaces lorsqu'elles sont détectées par les moyens de détection qui figurent également sur la tête (11).

L'existence des trois portions (13, 14 et 15) du bras, de la rotule (19), de la crémaillère (18), du chariot (20) et de la glissière (21) permet d'aboutir à la couverture d'un volume maximal, volume dont l'enveloppe est étroitement contrôlée par le logiciel de l'unité de gestion électronique, à l'aide des points mémorisés lors de la phase de maillage.

La distance à laquelle la tête (11) du robot opère est en principe gardée sensiblement constante, sauf le cas échant en cas de détection d'une salissure.

Le bras du robot assure de plus le transport des énergies, des signaux de commande et des fluides sous pression.

L'installation fonctionne de la manière suivante : lorsque le véhicule traverse le périmètre de sécurité, les organes de détection (5, 6) en entrée et leurs équivalents en sortie communiquent la détection du franchissement à l'unité centrale électronique de commande. Lorsque les organes de détection de l'entrée (5 et 6) indiquent un tel franchissement, un organe de signalisation (non représenté), par exemple du type panneau lumineux, indique à l'usager du véhicule d'avancer. Lorsque le véhicule est à l'intérieur du périmètre de sécurité, c'est-à-dire qu'il n'a pas franchi les moyens de détection de sortie, l'indication d'avancer disparaît. Si l'usager positionne son véhicule trop loin, et franchit par conséquent les moyens de détection de sortie, les moyens de signalisation mentionnés auparavant indiquent à l'usager de reculer.

Lorsque le véhicule est correctement positionné, et que les moyens de détection d'entrée ou de sortie n'indiquent plus aucun franchissement, ces moyens de signalisation demandent à l'usager de quitter son véhicule et de rejoindre le panneau de sélection du programme de lavage (non représenté) situé à l'extérieur de la piste de lavage.

L'usager peut alors choisir un programme de lavage de son véhicule parmi une liste prédéfinie de possibilités décrites sur le panneau de sélection. Les moyens de paiement sont disposés adjacents à l'organe de sélection.

Lorsque la sélection est opérée, une unité de commande électronique provoque la fermeture des deux moyens d'accès (3, 4), en l'occurrence les deux volets de protection. Ensuite, la séquence de mesure de la forme et des dimensions du véhicule commence, sous forme du maillage précité dont chaque point est stocké dans une mémoire de l'unité centrale de gestion. La géométrie et les dimensions du véhicule étant mémorisées, la séquence de lavage peut commencer. Sa durée et son efficacité dépendent notamment de la sélection de programme effectuée par l'usager.

La distinction entre une salissure et par exemple une écaille de peinture est réalisée par les moyens de détection et de mesure, c'est-à-dire les CCD qui sont disposés sur la tête (11) du robot de lavage. Le programme de traitement de l'image, utilisant par exemple des technologies de type logique floue ou réseau de neurones, est capable de distinguer une protubérance d'un creux, et donc de faire la différence entre une salissure et une écaille de peinture.

Lorsqu'une salissure est détectée, le programme donne instruction au robot de réaliser des passages répétés, et/ou de faire tourner sa tête de rotation à une vitesse variable, jusqu'à détection de la disparition de la salissure.

Optionnellement, à la fin du lavage, lorsque le véhicule est sorti de la pièce de lavage, le robot peut être utilisé pour réaliser le lavage de la piste proprement dite.

## Revendications

1. Système de lavage à liquide en haute pression implantable sur une piste de lavage par exemple de véhicule automobile, comportant :
- des moyens de mesure (7, 8) de la géométrie extérieure du véhicule (V) ;
- des moyens de stockage des paramètres caractérisant cette forme extérieure ;
- des moyens de sélection d'un parmi plusieurs programmes de lavage mémorisés ; et
- une unité centrale de gestion des moyens mentionnés et de pilotage du robot ;
système comportant au moins un robot de lavage présentant des buses (22, 22', 22") de projection de liquide et muni de moyens de détection et de mesure, et de moyens de positionnement, **caractérisé en ce qu'**ils permettent au dit robot de se déplacer en permanence au voisinage du véhicule (V) à une distance de sa carrosserie sensiblement constante et inférieure à une valeur limite, les moyens de mesure de la géométrie du véhicule (V) réalisant un maillage en trois dimensions du véhicule et la forme et les dimensions extérieures du véhicule (V) étant stockées de manière à permettre un positionnement du robot selon une forme quasi homothétique et de dimension un peu supérieure à celle du véhicule (V).

2. Système de lavage selon la revendication précédente, **caractérisé en ce qu'**il comporte des moyens de détection (5, 6) de l'entrée et de la sortie d'un véhicule (V) respectivement dans et de la piste.

3. Système de lavage selon la revendication précédente, **caractérisé en ce que** les moyens de détection (5, 6) de l'entrée et de la sortie d'un véhicule (V) respectivement dans et de la piste consistent en deux paires d'émetteurs (5) et de récepteurs (6) disposés au voisinage respectivement de l'entrée et de la sortie de la piste.

4. Système de lavage selon la revendication précédente, **caractérisé en ce que** l'émetteur (5) et le récepteur (6) de chaque paire sont placés l'un en face de l'autre.

5. Système de lavage selon la revendication précédente, **caractérisé en ce que** la coupure du faisceau envoyé par l'émetteur (5) à destination du récepteur (6) entraîne l'arrêt du robot s'il est en cours de fonctionnement.

6. Système de lavage selon l'une quelconque des revendications 3 à 5, **caractérisé en ce que** les émetteurs (5) et les récepteurs (6) sont à infrarouge.

7. Système de lavage selon l'une quelconque des revendications précédentes, **caractérisé en ce qu'**il comprend au moins un organe de signalisation à destination du conducteur du véhicule (V), aux fins de lui indiquer le positionnement correct du véhicule (V) en vue du lavage.

8. Système de lavage selon la revendication précédente, **caractérisé en ce que** l'organe de signalisation émet un signal de positionnement correct lorsque le véhicule est au delà des moyens de détection (5, 6) d'entrée et en deçà des moyens (5, 6) de détection de sortie.

9. Système de lavage selon l'une quelconque des revendications précédentes, **caractérisé en ce que** les moyens de mesure (7, 8) de la forme extérieure du véhicule (V) sont basés sur un dispositif comprenant au moins un diffuseur de trames (T, T, T") couplé à au moins un capteur de la forme de la trame, deux de ces dispositifs (7, 8) étant disposés de part et d'autre du véhicule (V) par rapport à l'axe de la piste, et coulissables par pas successifs selon des glissières (9) parallèles audit axe et situées à une hauteur au moins égale à celle du véhicule (V).

10. Système de lavage selon la revendication précédente, **caractérisé en ce que** les diffuseurs constituent chaque trame (T, T, T") à l'aide d'un rayon laser.

11. Système de lavage selon la revendication précédente, **caractérisé en ce que** les capteurs sont des capteurs CCD.

12. Système de lavage selon l'une quelconque des revendications précédentes, **caractérisé en ce que** des barrières de protection (3, 4) sont disposées aux deux extrémités axiales de la piste.

13. Système de lavage selon la revendication précédente, **caractérisé en ce que** lesdites barrières sont des rideaux (3, 4) en matière plastique souple.

14. Système de lavage selon l'une quelconque des revendications précédentes, **caractérisé en ce que** des moyens de paiement sont combinés aux moyens de sélection d'un programme de lavage.

15. Système de lavage selon l'une quelconque des revendications précédentes, **caractérisé en ce que** le robot comporte une tête (11) dotée de buses (22, 22', 22") de projection de liquide et de moyens de détection et de mesure, ladite tête (11) étant articulée par rapport à l'extrémité d'un bras (13, 14, 15) dont l'autre extrémité est reliée à un chariot (20) via une liaison (19) de type à rotule, ledit chariot (20) étant monté coulissant au moins parallèlement à l'axe de la piste dans une glissière (21) montée au-dessus du véhicule (V).

16. Système de lavage selon la revendication précédente, **caractérisé en ce que** le bras se compose de trois portions (13, 14, 15) articulées à leurs jonctions (16, 17).

17. Système de lavage selon la revendication précédente, **caractérisé en ce que** la portion du bras reliée à la rotule (19) peut se déplacer en translation par rapport à cette dernière au moyen d'une liaison (18) de type crémaillère.

18. Système de lavage selon l'une des revendications 15 à 17, **caractérisé en ce que** la glissière du chariot (20) comporte au moins une poutrelle (21) profilée apte à permettre un déplacement rectiligne du chariot (20).

19. Système de lavage selon l'une quelconque des revendications 15 à 18, **caractérisé en ce que** les buses (22, 22', 22") de projection de liquide sont au nombre de trois.

20. Système de lavage selon l'une quelconque des revendications 15 à 19, **caractérisé en ce que** les moyens de mesure et de détection équipant la tête (11) sont constitués d'au moins un capteur CCD.

21. Système de lavage selon l'une quelconque des revendications précédentes, **caractérisé en ce que** l'unité centrale de gestion est équipée d'un logiciel de reconnaissance des formes et des couleurs.

22. Système de lavage de véhicule selon la revendication précédente, **caractérisé en ce que** le logiciel de détection des formes est basé sur une technologie de type logique floue ou à réseaux de neurones.

23. Système de lavage de véhicules selon l'une quelconque des revendications précédentes, **caractérisé en ce que** les moyens de sélection offrent des options de lavage choisies parmi les suivantes:
- prélavage à pH faible ;
- prélavage à pH élevé ;
- lavage ;
- lavage à mousses actives ;
- rinçage à eau dure ;
- rinçage avec cire lustrante ;
- rinçage à l'eau osmosée :
- séchage.

24. Système de lavage de véhicule selon l'une quelconque des revendications précédentes, **caractérisé en ce qu'**il est équipé d'un écran d'affichage par exemple de type LCD qui reproduit à l'attention de l'usager l'image numérique de la forme géométrique de son véhicule (V) pendant et/ou après l'opération de reconnaissance géométrique.

25. Système de lavage selon l'une quelconque des revendications précédentes, **caractérisé en ce que** le robot comporte un système de communication, par exemple du type synthèse et / ou reconnaissance vocale, en vue d'échanger des informations avec l'usager.

26. Procédé d'automatisation du lavage par exemple d'un véhicule sur une piste de lavage au moyen du système selon les revendications précédentes, **caractérisé en ce qu'**il comporte les étapes suivantes :
- détection de l'entrée du véhicule (V) dans la piste ;
- validation de son positionnement dans un périmètre sécurisable de la piste ;
- indication au conducteur de quitter son véhicule (V) ;
- sélection du programme de lavage;
- reconnaissance de la géométrie et des dimensions du véhicule (V) ; et
- lavage du véhicule (V) par un robot se déplaçant à une distance sensiblement constante de la surface extérieure du véhicule (V), et se positionnant selon une forme quasi homothétique et de dimension un peu supérieure à celle du véhicule (V).

27. Procédé d'automatisation du lavage selon la revendication précédente, **caractérisé par** la fermeture de chaque issue de la piste avant le lavage du véhicule.

28. Procédé d'automatisation du lavage selon l'une des revendications 26 et 27, **caractérisé en ce que** la validation du positionnement du véhicule (V) est réalisée par des moyens de détection (5, 6) de l'entrée et de la sortie du véhicule (V).

29. Procédé d'automatisation du lavage selon l'une des revendications 26 à 28, **caractérisé en ce qu'**il comporte une détection des salissures par reconnaissance d'un relief dépassant de la carrosserie du véhicule (V).

30. Procédé d'automatisation du lavage selon la revendication précédente, **caractérisé en ce que** les organes de lavage repassent en boucle à l'endroit où la salissure a été détectée jusqu'à sa disparition.

31. Procédé d'automatisation du lavage selon l'une quelconque des revendications 26 à 30, **caractérisé en ce qu'**il comprend le nettoyage de la piste lorsque le véhicule (V) ne s'y trouve plus.

32. Procédé d'automatisation du lavage selon l'une quelconque des revendications 26 à 32, **caractérisé en ce que** des messages sous forme de jet de produit de lavage et / ou de faisceau de lumière sont projetés sur les parois du véhicule (V) et / ou de la piste de lavage.

33. Procédé d'automatisation du lavage selon l'une quelconque des revendications 26 à 33, **caractérisé en ce qu'**au moins un produit de lavage est projeté sur le véhicule (V) pendant la phase de reconnaissance de la géométrie et des dimensions du véhicule (V).

## Claims

1. High-pressure fluid washing system which can be installed on a washing track, for example for a motor vehicle, comprising:
- means (7, 8) for measuring the outer geometry of the vehicle (V);
- means for storage of the parameters which characterise this outer form;
- means for selection of one out of a plurality of washing programmes stored; and
- a central unit for control of the means in question and for piloting of the robot;
which system comprises at least one washing robot with nozzles (22, 22' 22") for projection of fluid, and is provided with means for detection and measurement, and with means for positioning, **characterised in that** they allow the said robot to be displaced continually in the vicinity of the vehicle (V), at a distance from its bodywork which is substantially constant, and is less than a limit value, the means for measurement of the geometry of the vehicle (V) creating a three-dimensional lattice of the vehicle, and the form and outer dimensions of the vehicle (V) being stored so as to permit positioning of the robot according to a virtually homothetic form, with dimensions slightly greater than those of the vehicle (V).

2. Washing system according to the preceding claim, **characterised in that** it comprises means (5, 6) for detection of the entry and exit of a vehicle (V), respectively onto, and off the track.

3. Washing system according to the preceding claim, **characterised in that** the means (5, 6) for detection of the entry and exit of a vehicle (V) respectively onto, and off the track consist of two pairs of emitters (5) and receivers (6) which are disposed in the vicinity respectively of the entry and exit of the track.

4. Washing system according to the preceding claim, **characterised in that** the emitter (5) and receiver (6) of each pair are placed opposite one another.

5. Washing system according to the preceding claim, **characterised in that** the cut-off of the beam emitted by the emitter (5) towards the receiver (6) gives rise to stoppage of the robot, if it is functioning.

6. Washing system according to any one of claims 3 to 5, **characterised in that** the emitters (5) and receivers (6) are infrared.

7. Washing system according to any one of the preceding claims, **characterised in that** it comprises at least one unit for signalling to the driver of the vehicle (V), in order to indicate to him the correct positioning of the vehicle (V) for the purpose of washing.

8. Washing system according to the preceding claim, **characterised in that** the signalling unit emits a correct positioning signal when the vehicle is beyond the means (5, 6) for detection of entry, and before the means (5, 6) for detection of exit.

9. Washing system according to any one of the preceding claims, **characterised in that** the means (7, 8) for measurement of the outer form of the vehicle (V) are based on a device comprising at least one raster diffuser (T, T', T") coupled to at least one sensor of the form of the raster, two of these devices (7, 8) being disposed on both sides of the vehicle (V) relative to the axis of the track, and being able to slide in successive steps along slides (9) which are parallel to the said axis, and are situated at a height which is at least equal to that of the vehicle (V).

10. Washing system according to the preceding claim, **characterised in that** the diffusers constitute each raster (T, T', T") by means of a laser ray.

11. Washing system according to the preceding claim, **characterised in that** the sensors are CCD sensors.

12. Washing system according to any one of the preceding claims, **characterised in that** protective barriers (3, 4) are disposed at the two axial ends of the track.

13. Washing system according to the preceding claim, **characterised in that** the said barriers are curtains (3, 4) made of flexible plastic material.

14. Washing system according to any one of the preceding claims, **characterised in that** payment means are combined with the means for selection of a washing programme.

15. Washing system according to any one of the preceding claims, **characterised in that** the robot comprises a head (11) which is provided with nozzles (22, 22', 22") for projection of fluid, and means for detection and measurement, the said head (11) being articulated relative to the end of an arm (13, 14, 15), the other end of which is connected to a carriage (20) via a connection (19) of the swivel joint type, the said carriage (20) being fitted such as to slide at least parallel to the axis of the track in a slide (21) which is fitted above the vehicle (V).

16. Washing system according to the preceding claim, **characterised in that** the arm consists of three portions (13, 14, 15) which are articulated at their junctions (16, 17).

17. Washing system according to the preceding claim, **characterised in that** the portion of the arm which is connected to the swivel joint (19) can be displaced in translation relative to the latter by means of a connection (18) of the rack type.

18. Washing system according to one of claims 15 to 17, **characterised in that** the slide of the carriage (20) comprises at least one profiled beam (21) which can permit straight displacement of the carriage (20).

19. Washing system according to any one of claims 15 to 18, **characterised in that** there are three nozzles (22, 22', 22") for projection of fluid.

20. Washing system according to any one of claims 15 to 19, **characterised in that** the means for measurement and detection which equip the head (11) consist of at least one CCD sensor.

21. Washing system according to any one of the preceding claims, **characterised in that** the central control unit is equipped with software for recognition of forms and colours.

22. Vehicle washing system according to the preceding claim, **characterised in that** the software for detection of the forms is based on a technology of the fuzzy logic or neurone network type.

23. Vehicle washing system according to any one of the preceding claims, **characterised in that** the means for selection offer washing options chosen from amongst the following:
- pre-washing with a low pH;
- pre-washing with a high pH;
- washing;
- washing with active foam;
- rinsing with hard water;
- rinsing with polishing wax;
- rinsing with water subjected to osmosis;
- drying.

24. Vehicle washing system according to any one of the preceding claims, **characterised in that** it is equipped with a display screen, for example of the LCD type, which reproduces for the attention of the user the digital image of the geometric form of his vehicle (V) during and/or after the operation of geometric recognition.

25. Washing system according to any one of the preceding claims, **characterised in that** the robot comprises a communication system, for example of the voice recognition and/or synthesis type, in order to exchange information with the user.

26. Method for automation of washing, for example of a vehicle on a washing track, by means of the system according to the preceding claims, **characterised in that** it comprises the following steps:
- detection of the entry of the vehicle (V) onto the track;
- validation of its positioning in a perimeter of the track which can be made secure;
- instruction to the driver to leave his vehicle (V) ;
- selection of the washing programme;
- recognition of the geometry and dimensions of the vehicle (V); and
- washing of the vehicle (V) by a robot which is displaced at a substantially constant distance from the outer surface of the vehicle (V), and is positioned according to a virtually homothetic form, and a dimension slightly greater than that of the vehicle (V).

27. Method for automation of the washing according to the preceding claim, **characterised by** the closure of each opening of the track before the vehicle is washed.

28. Method for automation of the washing according to one of claims 26 and 27, **characterised in that** the validation of the positioning of the vehicle (V) is carried out by means (5, 6) for detection of the entry and exit of the vehicle (V).

29. Method for automation of the washing according to one of claims 26 to 28, **characterised in that** it comprises detection of the dirt by recognition of a relief which projects beyond the bodywork of the vehicle (V).

30. Method for automation of the washing according to the preceding claim, **characterised in that** the washing units pass again in a loop over the location where the dirt has been detected, until the dirt disappears.

31. Method for automation of the washing according to any one of claims 26 to 30, **characterised in that** it comprises the cleaning of the track when the vehicle (V) is no longer there.

32. Method for automation of the washing according to any one of claims 26 to 32, **characterised in that** messages in the form of a jet of washing product and/or a beam of light are projected onto the walls of the vehicle (V) and/or the washing track.

33. Method for automation of the washing according to one of claims 26 to 33, **characterised in that** at least one washing product is projected onto the vehicle (V) during the stage of recognition of the geometry and dimensions of the vehicle (V).

## Patentansprüche

1. Anlage zum Waschen mit Hochdruckflüssigkeit, die in einer Waschstraße beispielsweise für Kraftfahrzeuge installierbar ist und umfasst:
- Mittel (7, 8) zum Messen der äußeren Geometrie des Fahrzeugs (V);
- Mittel zum Speichern von Parametern, die diese äußere Form charakterisieren;
- Mittel zum Auswählen aus mehreren gespeicherten Waschprogrammen; und
- eine Zentraleinheit zum Steuern der genannten Mittel und zur Robotersteuerung;
wobei die Anlage wenigstens einen Waschroboter enthält, der Düsen (22, 22', 22") zum Ausstoßen von Flüssigkeit aufweist und mit Erfassungs- und Messmitteln sowie mit Positionierungsmitteln versehen ist, **dadurch gekennzeichnet, dass** diese dem Roboter ermöglichen, sich ständig in der Umgebung des Fahrzeugs (V) in einem Abstand von seiner Karosserie, der im Wesentlichen konstant und kleiner als ein Grenzwert ist, zu verlagern, wobei die Mittel zum Messen der Geometrie des Fahrzeug (V) eine dreidimensionale Netznachbildung des Fahrzeugs schaffen und wobei die äußere Form und die äußeren Abmessungen des Fahrzeugs (V) in der Weise gespeichert werden, dass es möglich ist, dass eine Positionierung des Roboters einer quasi-homothetischen Form folgt, die eine Abmessung hat, die etwas größer als jene des Fahrzeugs (V) ist.

2. Waschanlage nach dem vorhergehenden Anspruch, **dadurch gekennzeichnet, dass** sie Mittel (5, 6) zum Erfassen des Einfahrens eines Fahrzeugs (V) in die Straße bzw. des Verlassens derselben umfasst.

3. Waschanlage nach dem vorhergehenden Anspruch, **dadurch gekennzeichnet, dass** die Mittel (5, 6) zum Erfassen des Einfahrens eines Fahrzeugs (V) in die Straße bzw. des Verlassens derselben aus zwei Paaren von Sendern (5) und Empfängern (6) bestehen, die in der Umgebung des Eingangs bzw. des Ausgangs der Straße angeordnet sind.

4. Waschanlage nach dem vorhergehenden Anspruch, **dadurch gekennzeichnet, dass** der Sender (5) und der Empfänger (6) jedes Paars einander gegenüber angeordnet sind.

5. Waschanlage nach dem vorhergehenden Anspruch, **dadurch gekennzeichnet, dass** die Unterbrechung des von dem Sender (5) zu dem Empfänger (6) geschickten Strahlenbündels das Anhalten des Roboters zur Folge hat, wenn er momentan in Betrieb ist.

6. Waschanlage nach einem der Ansprüche 3 bis 5, **dadurch gekennzeichnet, dass** die Sender (5) und die Empfänger (6) mit Infrarotlicht arbeiten.

7. Waschanlage nach einem der vorhergehenden Ansprüche, **dadurch gekennzeichnet, dass** es wenigstens ein Signalgebungsorgan, das den Fahrer des Fahrzeugs (V) zum Ziel hat, umfasst, um diesem die korrekte Positionierung des Fahrzeugs (V) für das Waschen anzugeben.

8. Waschanlage nach dem vorhergehenden Anspruch, **dadurch gekennzeichnet, dass** das Signalgebungsorgan ein Signal für die korrekte Positionierung aussendet, wenn sich das Fahrzeug hinter den Einfahrterfassungsmitteln (5, 6) und vor den Ausfahrterfassungsmitteln (5, 6) befindet.

9. Waschanlage nach einem der vorhergehenden Ansprüche, **dadurch gekennzeichnet, dass** die Mittel (7, 8) zum Messen der äußeren Form des Fahrzeugs (V) auf einer Vorrichtung basieren, die wenigstens einen Rasterbildverteiler (T, T', T") umfasst, der mit wenigstens einem Sensor für die Form des Rasterbildes versehen ist, wobei zwei dieser Vorrichtungen (7, 8) in Bezug auf die Längsachse der Straße beiderseits des Fahrzeugs (V) angeordnet sind und in sukzessiven Schritten auf Gleitbahnen (9), die zu der Längsachse parallel sind und sich auf einer Höhe befinden, die wenigstens gleich jener des Fahrzeugs (V) ist, gleiten können.

10. Waschanlage nach dem vorhergehenden Anspruch, **dadurch gekennzeichnet, dass** die Verteiler jedes Rasterbild (T, T', T") mit Hilfe eines Laserstrahls bilden.

11. Waschanlage nach dem vorhergehenden Anspruch, **dadurch gekennzeichnet, dass** die Sensoren CCD-Sensoren sind.

12. Waschanlage nach einem der vorhergehenden Ansprüche, **dadurch gekennzeichnet, dass** an den zwei axialen Enden der Straße Schutzsperren (3, 4) angeordnet sind.

13. Waschanlage nach dem vorhergehenden Anspruch, **dadurch gekennzeichnet, dass** die Sperren Vorhänge (3, 4) aus weichem Kunststoff sind.

14. Waschanlage nach einem der vorhergehenden Ansprüche, **dadurch gekennzeichnet, dass** mit den Mitteln zum Auswählen eines Waschprogramms Zahlungsmittel kombiniert sind.

15. Waschanlage nach einem der vorhergehenden Ansprüche, **dadurch gekennzeichnet, dass** der Roboter einen mit Flüssigkeitausstoßdüsen (22, 22', 22") versehenen Kopf (11) und Erfassungs- und Messmittel umfasst, wobei der Kopf (11) in Bezug auf das Ende eines Arms (13, 14, 15) angelenkt ist, dessen anderes Ende über eine Verbindung (19) des Kugelgelenktyps mit einem Schlitten (20) verbunden ist, wobei der Schlitten (20) so angebracht ist, dass er wenigstens parallel zur Längsachse der Straße in einer Gleitbahn (21), die über dem Fahrzeug (V) angebracht ist, gleiten kann.

16. Waschanlage nach dem vorhergehenden Anspruch, **dadurch gekennzeichnet, dass** der Arm aus drei Abschnitten (13, 14, 15) aufgebaut ist, die an ihren Verbindungsstellen (16, 17) angelenkt sind.

17. Waschanlage nach dem vorhergehenden Anspruch, **dadurch gekennzeichnet, dass** der Abschnitt des Arms, der mit dem Kugelgelenk (19) verbunden ist, sich mittels einer Verbindung (18) des Zahnstangentyps translatorisch in Bezug auf dieses Kugelgelenk (19) verlagern kann.

18. Waschanlage nach einem der Ansprüche 15 bis 17, **dadurch gekennzeichnet, dass** die Gleitbahn des Schlittens (20) wenigstens einen Profilträger (21) aufweist, der eine geradlinige Verlagerung des Schlittens (20) ermöglichen kann.

19. Waschanlage nach einem der Ansprüche 15 bis 18, **dadurch gekennzeichnet, dass** die Flüssigkeitsausstoßdüsen (22, 22', 22") dreifach vorhanden sind.

20. Waschanlage nach einem der Ansprüche 15 bis 19, **dadurch gekennzeichnet, dass** die Mess- und Erfassungsmittel, mit denen der Kopf (11) ausgerüstet ist, aus wenigstens einem CCD-Sensor gebildet sind.

21. Waschanlage nach einem der vorhergehenden Ansprüche, **dadurch gekennzeichnet, dass** die Steuerzentraleinheit mit einer Software zum Erkennen von Formen und Farben versehen ist.

22. Fahrzeugwaschanlage nach dem vorhergehenden Anspruch, **dadurch gekennzeichnet, dass** die Software zum Erfassen von Formen auf einer Technologie des Typs unscharfe Logik oder des Typs mit neuronalen Netzen basiert.

23. Fahrzeugwaschanlage nach einem der vorhergehenden Ansprüche, **dadurch gekennzeichnet, dass** die Auswahlmittel Waschoptionen anbieten, die aus den folgenden Elementen gewählt sind:
- Vorwaschen mit niedrigem pH-Wert;
- Vorwaschen mit hohem pH-Wert;
- Waschen;
- Waschen mit Aktivschäumen;
- Spülen mit hartem Wasser;
- Spülen mit Glanzwachs;
- Spülen mit Wasser, das einer Osmose unterworfen worden ist;
- Trocknen.

24. Fahrzeugwaschanlage nach einem der vorhergehenden Ansprüche, **dadurch gekennzeichnet, dass** es mit einem Anzeigeschirm beispielsweise des LCD-Typs ausgerüstet ist, das für den Benutzer das digitale Bild der geometrischen Form seines Fahrzeugs (V) während und/oder nach der Operation der geometrischen Erkennung wiedergibt.

25. Waschanlage nach einem der vorhergehenden Ansprüche, **dadurch gekennzeichnet, dass** der Roboter ein Kommunikationsanlage, beispielsweise des Typs Sprachsynthese und/oder Spracherkennung, enthält, um mit dem Benutzer Informationen auszutauschen.

26. Verfahren zum Automatisieren des Waschens beispielsweise eines Fahrzeugs in einer Waschstraße mittels der Anlage nach den vorhergehenden Ansprüchen, **dadurch gekennzeichnet, dass** es die folgenden Schritte umfasst:
- Erfassen des Einfahrens des Fahrzeugs (V) in die Straße;
- Validieren seiner Position innerhalb eines sicheren Umfangs der Straße;
- Bitten des Fahrers, sein Fahrzeug (V) zu verlassen;
- Auswählen des Waschprogramms;
- Erkennen der Geometrie und der Abmessungen des Fahrzeugs (V); und
- Waschen des Fahrzeugs (V) durch einen Roboter, der sich in einem im Wesentlichen konstanten Abstand von der äußeren Oberfläche des Fahrzeugs (V) verlagert und sich in Übereinstimmung mit einer quasi-homothetischen Form mit einer Abmessung, die etwas größer als jene des Fahrzeugs (V) ist, positioniert.

27. Waschautomatisierungsverfahren nach dem vorhergehenden Anspruch, **gekennzeichnet durch** das Schließen jedes Ausgangs der Straße vor dem Waschen des Fahrzeugs.

28. Waschautomatisierungsverfahren nach einem der Ansprüche 26 und 27, **dadurch gekennzeichnet, dass** die Validierung der Positionierung des Fahrzeugs (V) durch Mittel (5, 6) zum Erfassen des Einfahrens und Ausfahrens des Fahrzeugs (V) verwirklicht wird.

29. Waschautomatisierungsverfahren nach einem der Ansprüche 26 bis 28, **dadurch gekennzeichnet, dass** es eine Erfassung von Schmutz durch Erkennen einer Erhöhung, die sich von der Karosserie des Fahrzeugs (V) erhebt, umfasst.

30. Waschautomatisierungsverfahren nach dem vorhergehenden Anspruch, **dadurch gekennzeichnet, dass** die Waschorgane an dem Ort, an dem Schmutz erfasst worden ist, bis zu dessen Verschwinden eine Schleife durchlaufen.

31. Waschautomatisierungsverfahren nach einem der Ansprüche 26 bis 30, **dadurch gekennzeichnet, dass** es die Reinigung der Straße umfasst, wenn sich das Fahrzeug (V) nicht mehr darin befindet.

32. Waschautomatisierungsverfahren nach einem der Ansprüche 26 bis 32, **dadurch gekennzeichnet, dass** Nachrichten in Form eines Strahls des Waschprodukts und/oder eines Lichtstrahlenbündels auf die Wände des Fahrzeugs (V) und/oder der Waschstraße geworfen werden.

33. Waschautomatisierungsverfahren nach einem der Ansprüche 26 bis 33, dass während der Phase der Erkennung der Geometrie und der Abmessungen des Fahrzeugs wenigstens ein Waschprodukt auf das Fahrzeug (V) geschleudert wird.
